# EUROPÄISCHE PATENTSCHRIFT

(11) **EP 0 952 900 B1**
(45) Veröffentlichungstag und Bekanntmachung des Hinweises auf die Patenterteilung: **23.05.2001**
(21) Anmeldenummer: 98905290.7
(22) Anmeldetag: 13.01.1998
(51) Int. Cl.: B23F 19/10

(54) **WERKZEUGMASCHINE ZUM ABDACHEN DER STIRNSEITEN DER ZÄHNE VON ZAHNRÄDERN ODER DERGLEICHEN**
MACHINE TOOL FOR CHAMFERING THE FACES OF THE TEETH OF TOOTHED WHEELS OR THE LIKE
MACHINE-OUTIL DESTINEE AU BISEAUTAGE DES FACES DES DENTS DE ROUES DENTEES OU D'ELEMENTS ANALOGUES

(30) Priorität: 16.01.1997 DE 19701267
(43) Veröffentlichungstag der Anmeldung: 03.11.1999
(73) Patentinhaber: WERA WERK HERMANN WERNER GMBH & CO., 42349 Wuppertal (DE)
(72) Erfinder: GARSCHAGEN, Friedrich, Albert, D-42855 Remscheid (DE); HEYM, Hans-Udo, D-42327 Wuppertal (DE)
(74) Vertreter: Grundmann, Dirk, Dr.
(86) Internationale Anmeldenummer: EP9800157
(87) Internationale Veröffentlichungsnummer: WO9831495

(56) Entgegenhaltungen:
- EP-A- 0 107 826
- DE-A- 4 328 801
- FR-A- 2 299 936

## Beschreibung

Die Erfindung betrifft eine Werkzeugmaschine zum Abdachen der Stirnseiten der Zähne von Zahnrädern oder dergleichen, mit zwei drehangetriebenen, gleichzeitig an verschiedenen Zähnen jeweils eine von zwei Dachflächen bearbeitende Schlagmesser, die mit ihren stirnseitigen Schneidkanten nach dem Schneidvorgang aus den Zahnlücken austauchen.

Eine Werkzeugmaschine der in Rede stehenden Art ist bekannt aus dem europäischen Patent 0 107 826, wobei die Schneidkanten der Schlagmesser aus den Zahnlücken herausarbeiten verbunden mit dem Vorteil, daß durch die Schlagmesserbearbeitung an zahnradartigen Werkstücken gratfreie Abdachungen erzeugt werden.

Dem Gegenstand der Erfindung liegt die Aufgabe zugrunde, eine gattungsgemäße Werkzeugmaschine so auszugestalten, daß gleichzeitig mit dem Abdachen der Zähne von Zahnrädern oder dergleichen zusätzliche Schalterleichterungsflächen erzeugbar sind.

Diese Aufgabe ist zunächst und im wesentlichen bei einer Werkzeugmaschine mit den Merkmalen des Anspruchs 1 gelöst, wobei darauf abgestellt ist, ein drittes drehangetriebenes Werkzeug in Form eines Fingerfräsers zur zum Abdachen zeitparallelen Firstabrundung vorzusehen, dessen Achse radial zum Zahnrad ausgerichtet ist und welches in Werkstück-Achsrichtung im Rhythmus der vorbeieilenden Zähne vor- und rückgeschoben wird, tangential zur Dachneigung ein- und austauchend.

Zufolge derartiger Ausgestaltung ist eine Werkzeugmaschine der in Rede stehenden Art geschaffen, die gleichzeitig mit dem Abdachen der Stirnseiten der Zähne von Zahnrädern oder dergleichen zusätzliche Schalterleichterungsflächen erzeugt, und zwar in Form einer zwei Dachflächen miteinander verbindenden Firstabrundung. Solche Firstabrundungen erweisen sich von Vorteil, wenn derart erzeugte Zahnräder in Schaltgetrieben von Kraftfahrzeugen eingesetzt werden. Dies führt zu weichen verhakungsfreien Schaltvorgängen. Daneben wird ein etwaiger Sekundärgrat an der Austauchseite der Zähne wirkungsvoll beseitigt, so daß zusätzliche Nachbearbeitungen entfallen. Dabei ist die Bewegungsbahn des Fingerfräsers so gewählt, daß er tangential zur Dachneigung ein- und austaucht unter Erzielung glatter Übergänge zwischen den Dachflächen und der diesen zugeordneten Firstabrundung. Das Ein- und Austauchen des Fingerfräsers kann hub- oder kurvengesteuert erfolgen. Es genügt ein Hubweg von wenigen Millimetern, abhängig von der Zahngröße. Der an sich bewährte Aufbau der gattungsgemäßen Werkzeugmaschine kann weitestgehend beibehalten werden. Die beiden Schlagmesser sowie der Fingerfräser sitzen an drei verschiedenen Umfangspositionen zum zu bearbeitenden Zahnrad und arbeiten zu Arbeitsbeginn sämtlich jeweils in einen rohen Zahn. Hierdurch gibt es Zähne, die erst abgedacht und dann verrundet und Zähne, die erst verrundet und dann abgedacht werden. Die Werkzeugmaschine kann so ausgelegt sein, daß sie im Taktverfahren arbeitet. Hierbei erzeugen die Schlagmesser an einem stehenden, schrittweise weiterdrehbaren Zahnrad die eine und andere Dachfläche. Während der Schrittdrehung arbeitet dann der Fingerfräser und erzeugt die Firstabrundungen derart, daß nach einer 360°-Drehung sämtliche Abdachungen mit Firstabrundungen versehen sind. Die Bewegungsbahn des Fingerfräsers bzw. des Schlagmessers ist derart, daß der Fingerfräser aus der Dachfläche einer bereits gefertigten Abdachung tangential austaucht bzw. daß das die Abdachung schneidende Schlagmesser aus der von dem Fingerfräser geschnittenen Rundkontur tangential austritt, so daß eine Gratbildung mit Sicherheit vermieden ist. Alternativ ist es jedoch auch möglich, an einem kontinuierlich drehangetriebenen Zahnrad sowohl die Abdachungen als auch die Firstabrundungen zu schneiden. Überlagernd zum Vorschub des Werkstückes führt der Fingerfräser, gesteuert im Synchronlauf, seine Hubbewegung aus. Bezüglich des Fingerfräsers handelt es sich um einen Hochgeschwindigkeitsfräser. Dessen Vor- und Rückbewegung besitzt dabei eine Radialkomponente zur Werkstückachse, wobei der Betrag der Radialkomponente bevorzugt einer Neigung der Fingerfräserachse zur Umlaufebene des Werkstückes entspricht. Durch die Neigung wird der Verlauf der Firstabrundung bestimmt. Das mit Abdachungen und Fristabrundungen zu versehende Zahnrad erhält vor dem Anarbeiten der Abdachungen und Fristabrundungen bereits eine Abschrägung, welche der sogenannten Neigung der Fingerfräserachse zur Umlauf ebene des Werkstückes entspricht.

Nachstehend wird ein Ausführungsbeispiel der Erfindung anhand der Zeichnungen erläutert. Es zeigt:
- Fig. 1: einen Teilbereich einer Werkzeugmaschine im Bereich der beiden Schlagmesser und des Fingerfräsers in Ausgangsposition eines das Werkstück darstellenden Zahnrades,
- Fig. 2: die Ansicht in Pfeilrichtung II in Figur 1,

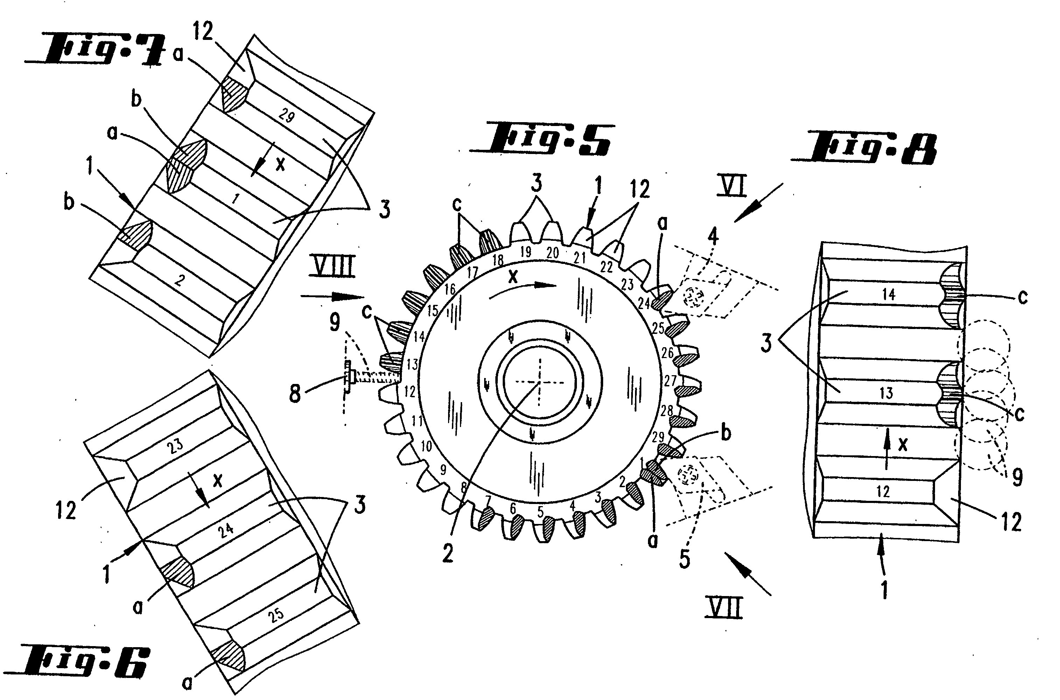

- Fig. 3: die Ansicht in Pfeilrichtung III in Figur 1,
- Fig. 4: die Ansicht in Pfeilrichtung IV in Figur 1,
- Fig. 5: eine der Figur 1 entsprechende Darstellung, jedoch bei um sechs Taktschritte weitergedrehtem Zahnrad,
- Fig. 6: die Ansicht in Pfeilrichtung VI in Figur 5,
- Fig. 7: die Ansicht in Pfeilrichtung VII in Figur 5,
- Fig. 8: die Ansicht in Pfeilrichtung VIII in Figur 5,
- Fig. 9: die Folgedarstellung der Figur 5, also nach insgesamt zwölf Taktschritten,
- Fig. 10: die Ansicht in Pfeilrichtung X in Figur 9,
- Fig. 11: die Ansicht in Pfeilrichtung XI in Figur 9,
- Fig. 12: die Ansicht in Pfeilrichtung XII in Figur 9,
- Fig. 13: die Folgedarstellung der Figur 9, wobei das Zahnrad, ausgehend von Figur 1, um achtzehn Taktschritte weitergedreht ist,
- Fig. 14: die Ansicht in Pfeilrichtung XIV in Figur 13,
- Fig. 15: die Ansicht in Pfeilrichtung XV in Figur 13,
- Fig.16: die Ansicht in Pfeilrichtung XVI in Figur 13,
- Fig. 17: den Schnitt nach der Linie XVII-XVII in Figur 1,
- Fig. 18: eine Ansicht des fertig bearbeiteten Zahnrades,
- Fig. 19: den Schnitt nach der Linie XIX -XIX in Figur 18, vergrößert dargestellt,
- Fig. 20: den Schnitt nach der Linie XX-XX in Figur 19, und zwar bei einem ausschließlich mit einer Rundkontur versehenen Zahn entsprechend der Zahnposition 13 in Figur 5,
- Fig. 21: ebenfalls einen Schnitt durch einen Zahn, entsprechend der Zahnposition 18 in Figur 9,
- Fig. 22: einen weiteren Querschnitt durch einen Zahn, welcher sich an der Zahnposition 18 in Figur 13 ergibt, und
- Fig. 23: einen Querschnitt durch einen Zahn entsprechend der Zahnposition 1 in Figur 13.

Die ein Zahnrad 1 aufnehmende Spannfutterachse ist mit der Ziffer 2 bezeichnet. Das nicht veranschaulichte Spannfutter ist Bestandteil einer Werkzeugmaschine zum Abdachen der Stirnseiten der Zähne 3 des Zahnrades 1. Letzteres wird von dem Spannfutter in Pfeilrichtung x schrittweise angetrieben. Zusätzlich vermag das Spannfutter mit dem Zahnrad 1 eine Bewegung in Spannfutterachsrichtung auszuführen.

Weitere Bestandteile der Werkzeugmaschine im Zerspanbereich sind zwei drehangetriebene Schlagmesser 4 und 5. Deren Antrieb ist derart, daß die stirnseitigen Schneidkanten nach dem Schneidvorgang aus den Zahnlücken austauchen. Die Schlagmesser 4,5 sitzen in maschinengestellseitigen Lagern 6,7, welche in Bezug auf die Spannfutterachse 2 um diese schwenkbar angeordnet und festlegbar sind. Sodann kann zusätzlich noch eine Neigungsverstellung der Lager 6,7 in Bezug auf die Umlaufebene des Werkstückes vorgenommen werden. Da dies bekannt ist, wird darauf nicht näher eingegangen.

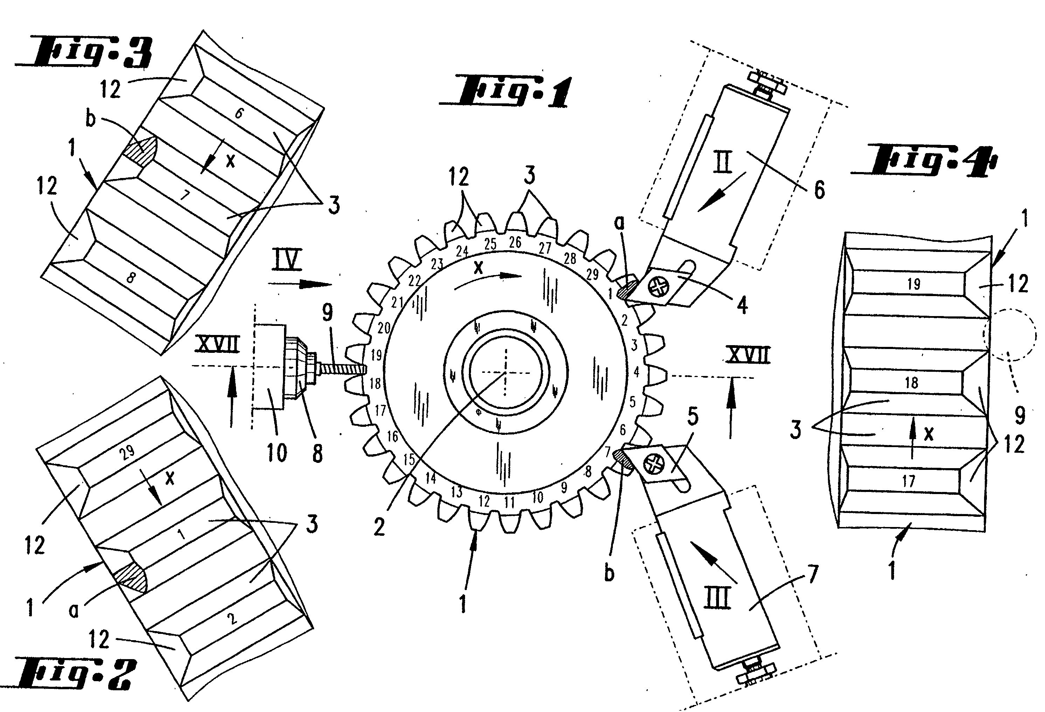

Die Schlagmesser 4,5 sind so ausgerichtet, daß das Schlagmesser 4 in der Ausgangsposition des Zahnrades 1 an dem ersten Zahn und das Schlagmesser 5 an dem siebten Zahn des Zahnrades 1 angreift unter Herstellung jeweils einer von zwei Dachflächen a und b, vergleiche Figur 1.

In Gegenüberlage zu den Schlagmessern 4,5 erstreckt sich auf der anderen Seite des Zahnrades 1 ein von einem Spannfutter 8 aufgenommener Fingerfräser 9. Bezüglich desselben handelt es sich um einen Hochgeschwindigkeitsfräser. In der Ausgangsposition gemäß Figur 1 ragt der Fingerfräser 9 in die Zahnlücke zwischen dem achtzehnten und neunzehnten Zahn hinein. Das freie Stirnende des Fingerfräsers 9 schließt etwa ab mit dem Grund der Zahnlücke. Schematisch ist in Figur 17 veranschaulicht, daß an dem Lagergehäuse 10 des drehangetriebenen Spannfutters 8 eine drehangetriebene Kurvenscheibe 11 angreift, welche dem Lagergehäuse 10 und damit dem Fingerfräser 9 eine Bewegungskomponente in Doppelpfeilrichtung y vermittelt. Der entsprechende Hub des Lagergehäuses 10 beträgt wenige Millimeter und ist im Synchronlauf entsprechend der Werkstück-Zähnezahn gesteuert.

Es stellt sich folgende Wirkungsweise ein:
Zum Arbeitsbeginn der Werkzeugmaschine werden die Schlagmesser 4,5 und der Fingerfräser 9 so ausgerichtet, daß das Schlagmesser 4 bei Drehantrieb an der Zahnposition 1 die Dachfläche a und das Schlagmesser 5 an der Zahnposition 7 die Dachfläche b erzeugt. Während der Rotation der Schlagmesser 4,5 erfolgt zwischen diesen und dem Zahnrad 1 eine relative Zustellbewegung. Vorzugsweise wird das Zahnrad 1 zugestellt. Der Fingerfräser 9 erstreckt sich demgegenüber in der Zahnlücke zwischen der achtzehnten und neunzehnten Zahnposition, vergleiche Figur 1. Nach Erzeugen der beiden Dachflächen a,b erfolgt eine Taktschrittdrehung in Pfeilrichtung x um das Maß der Teilung. Während dieser Taktdrehung überfährt der hubgesteuerte Fingerfräser 9 die abgeschrägte Stirnfläche des Zahnes an der Zahnposition 18. Einhergehend erfolgt eine Vor- und Rückbewegung durch die Kurvenscheibe 11 unter Erzeugung einer Firstabrundung, vergleiche hierzu insbesondere Figur 20. Die Ausrichtung des Fingerfräsers 9 ist derart, daß die Fingerfräserachse der Neigung der abgeschrägten Stirnfläche 12 der Zähne 3 angepaßt ist, also geneigt zur Umlauf ebene des Werkstückes bzw. des Zahnrades 1 verläuft.

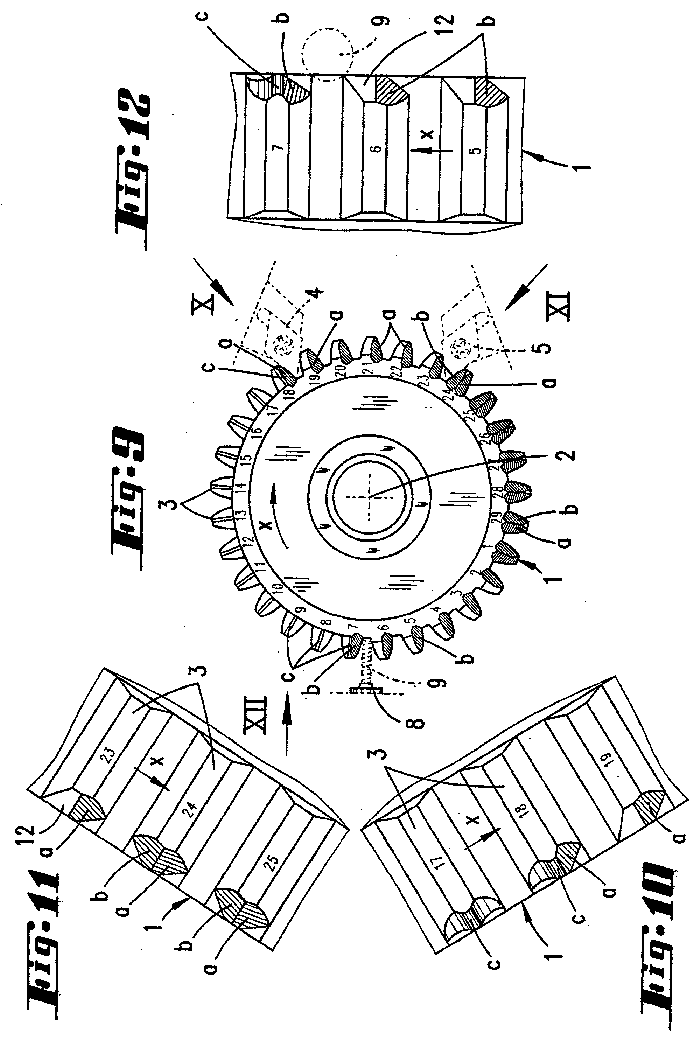

Nach sechs Taktschritten liegt die Stellung gemäß Figur 5 bis 8 vor. Der Zahn der Zahnposition 1 hat das Schlagmesser 5 erreicht, so daß dort durch das Schlagmesser ein Zahn mit zwei sich in einem First treffenden Dachflächen a,b erzeugt wird, vergleiche auch insbesondere Figur 7. Durch den Fingerfräser 9 wurden an den vorbeieilenden Zähnen 3 die entsprechenden Firstabrundungen c erzeugt. Mit den jenseits der Firstabrundung c liegenden Anschlußflächen ergibt sich etwa eine Wellenlinie an den noch keine Dachfläche besitzenden Zähnen 3, vergleiche Figur 8.

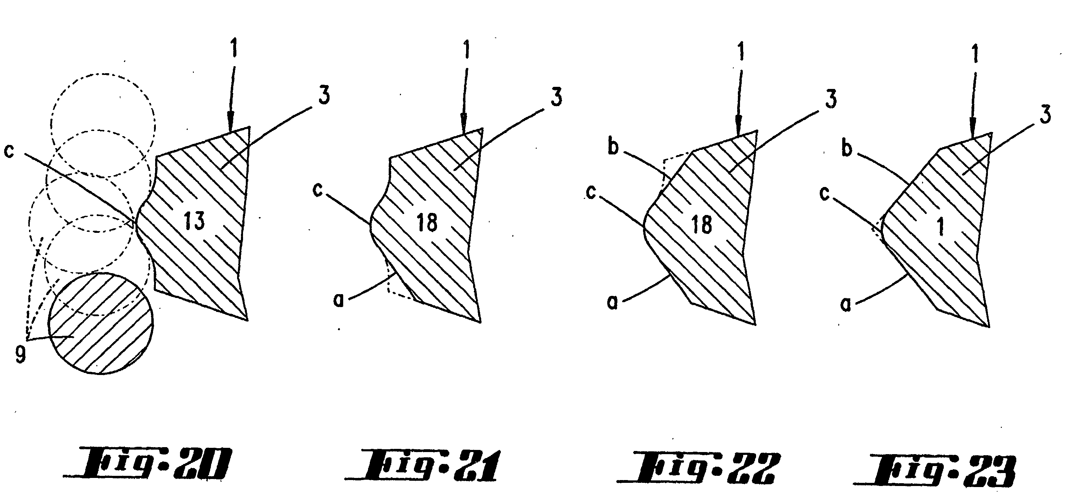

Nach weiteren sechs Taktschrittdrehungen ergibt sich die Stellung nach den Figuren 9 bis 12. Der an der Zahnposition 18 befindliche, die erste Firstabrundung c besitzende Zahn erhält dort durch das Schlagmesser 4 die Dachfläche a derart, daß diese tangential in die Firstabrundung c übergeht, vergleiche hierzu auch insbesondere Figur 21. Sodann hat der Zahn an der Zahnposition 7 den Fingerfräser 9 passiert, welcher dort, tangential an der betreffenden Dachfläche b vorbeigleitet und im Anschluß daran die Firstabrundung c erzeugt, vergleiche hierzu Figur 12. Es ist sodann der Figur 9 und 11 zu entnehmen, daß das Schlagmesser 5 einige Zähne mit sich in einer Dachfirstlinie treffenden Dachflächen a,b gefertigt hat.

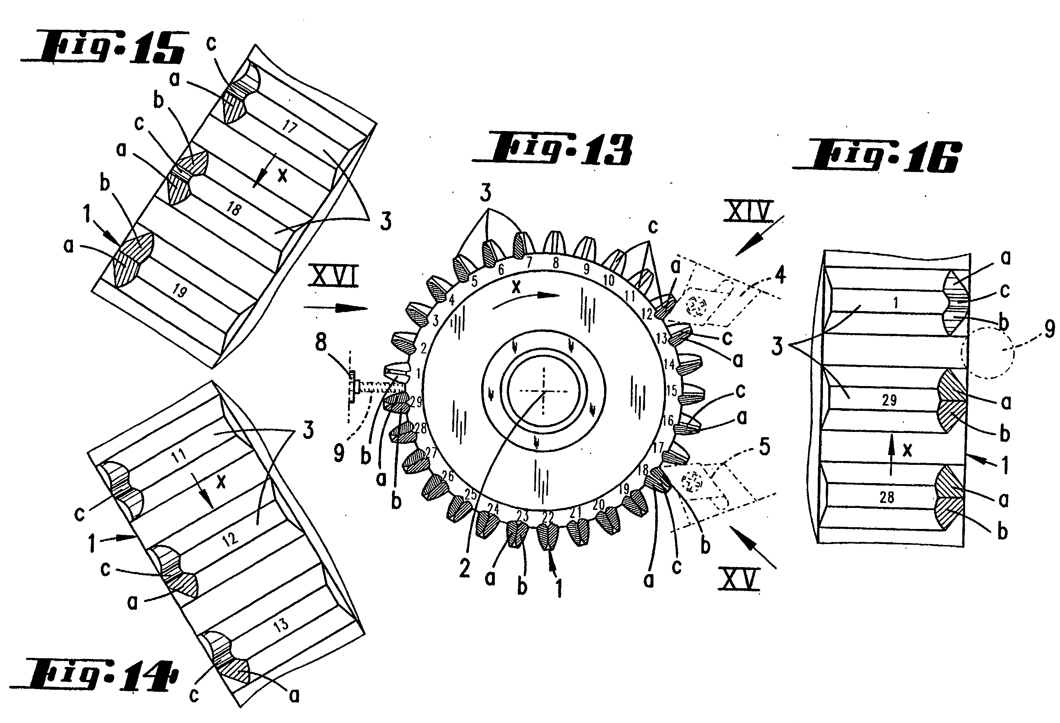

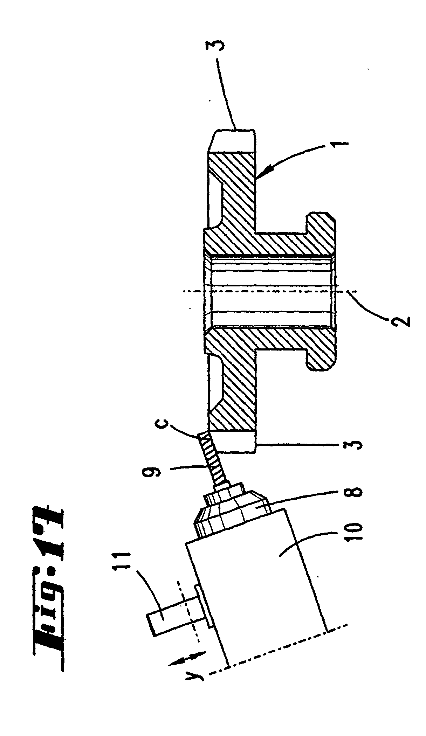

Nach wiederum sechs Taktschrittdrehungen des Zahnrades 1 nimmt dieses die Stellung gemäß Figur 13 bis 16 ein. Der Zahn an der Zahnposition 1 hat den Fingerfräser 9 passiert, so daß die sich in einer Schneide bzw. dem First treffenden Dachflächen a,b durch den Fingerfräser 9 die Firstabrundung c erhalten hat. Letzterer taucht hierbei tangential zur Dachneigung ein- und aus, und zwar gesteuert durch den ihm zugeordneten Kurventrieb, so daß die Dachflächen a,b tangential zur Firstabrundung c liegen, vergleiche insbesondere Figur 23. In diesem Fall schneidet der Fingerfräser 9 ausschließlich die Firstspitze zwischen den beiden Dachflächen a,b ab. Sodann hat gemäß Figur 13 und 15 der Zahn an der Zahnposition 18 das Schlagmesser 5 erreicht. Dieser die Dachfläche a und die Firstabrundung c aufweisende Zahn erhält in dieser Position die Dachfläche b, so daß dort an dem Zahn gemäß der Zahnposition 18 die Dachflächen a,b tangential zur Firstabrundung c verlaufen, vergleiche hierzu auch insbesondere die Figur 22.

Im Verlauf weiterer elf Taktschrittdrehungen - das Zahnrad 1 besitzt neunundzwanzig Zähne - hat sich das Zahnrad um 360° gedreht, es besitzt dann jeder Zahn sowohl die Dachflächen a,b als auch die zugehörige Firstabrundung c. Die auf diese Weise geschaffenen Abdachungen sind mit Sicherheit gratfrei. Auch das Entstehen eines etwaigen Sekundärgrates ist vermieden, so daß zusätzliche Nachbearbeitungen an den fertiggestellten Zahnrädern entfallen.

Grundsätzlich ist noch festzustellen, daß zu Bearbeitungsbeginn die drei Bearbeitungswerkzeuge sämtlich in jeweils einen rohen Zahn arbeiten.

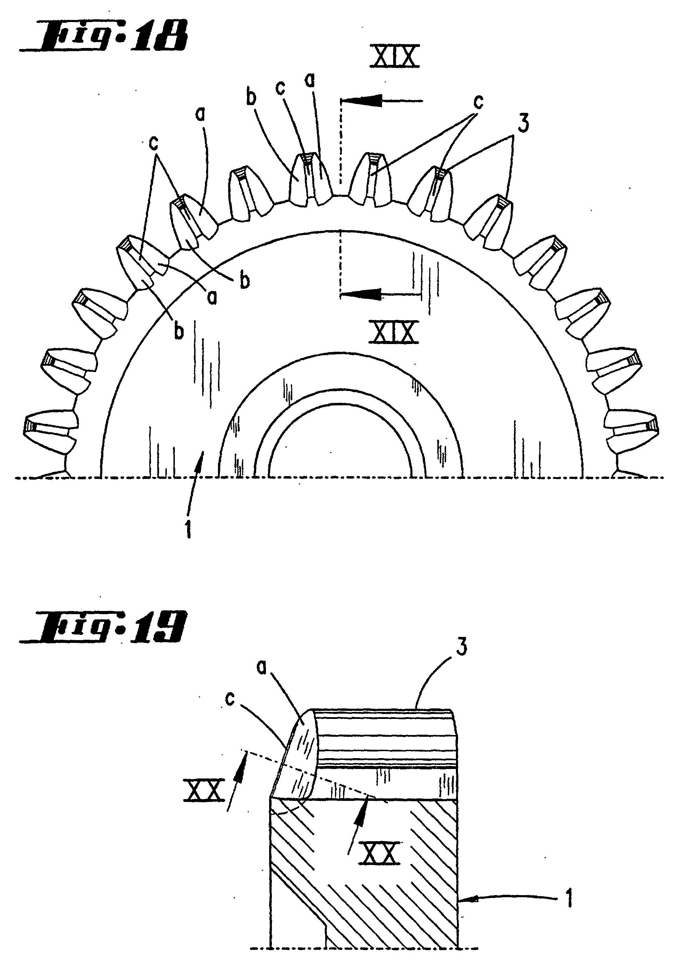

Das fertiggestellte Zahnrad 1 geht aus den Figuren 18 und 19 hervor.

Die erfindungsgemäße Werkzeugmaschine ist sodann einsetzbar bei innenverzahnten Schiebemuffen, Wellen etc., um dort entsprechende Firstabrundungen zu erzeugen.

## Patentansprüche

1. Werkzeugmaschine zum Abdachen der Stirnseiten der Zähne (3) von Zahnrädern (1) oder dergleichen, mit zwei drehangetriebenen, gleichzeitig an verschiedenen Zähnen jeweils eine von zwei Dachflächen (a, b) bearbeitende Schlagmesser (4,5,) die mit ihren stirnseitigen Schneidkanten nach dem Schneidvorgang aus den Zahnlücken austauchen, gekennzeichnet durch ein drittes drehangetriebenes Werkzeug in Form eines Fingerfräsers (9) zur zum Abdachen zeitparallelen Firstabrundung (c), dessen Achse radial zum Zahnrad (1) ausgerichtet ist und welches in Werkstückachsrichtung im Rhythmus der vorbeieilenden Zähne (3) vor- und rückgeschoben wird, tangential zur Dachneigung ein- und austauchend.

2. Werkzeugmaschine nach Anspruch 1, dadurch gekennzeichnet, daß die Vor- und Rückbewegung des Fingerfräsers (9) kurvengesteuert erfolgt.

3. Werkzeugmaschine nach einem oder mehreren der vorhergehenden Ansprüche, dadurch gekennzeichnet, daß die Bearbeitungswerkzeuge (4,5,9) an drei verschiedenen Umfangspositionen sitzen und zu Bearbeitungsbeginn sämtlich in jeweils einen rohen Zahn (1) arbeiten.

4. Werkzeugmaschine nach einem oder mehreren der vorhergehenden Ansprüche, dadurch gekennzeichnet, daß die Schlagmesser (4,5) in ein stehendes, schrittweise weiterdrehbares Zahnrad (1) arbeiten und der Fingerfräser (9) während der Schrittdrehung arbeitet derart, daß nach einer 360°-Drehung das Zahnrad (1) fertigbearbeitet ist.

5. Werkzeugmaschine nach einem oder mehreren der vorhergehenden Ansprüche, gekennzeichnet durch ein kontinuierlich drehangetriebenes Zahnrad (1) .

6. Werkzeugmaschine nach einem oder mehreren der vorhergehenden Ansprüche, dadurch gekennzeichnet, daß die Vor- und Rückbewegung eine Radialkomponente zur Werkstückachse (2) besitzt, deren Betrag bevorzugt einer Neigung der Fingerfräserachse zur Umlaufebene des Werkstückes (Zahnrad 1) entspricht.

## Claims

1. Machine tool for bevelling the end faces of the teeth (3) of gear wheels (1) or the like, the machine tool having two rotationally driven off-centre cutters (4, 5), the cutters (4, 5) machining, at the same time at different teeth, in each case one of the two bevelled faces (a, b), and the end face cutting edges of the cutters (4, 5) being withdrawn from the spaces between the teeth after the cutting operation, and characterised by a third rotationally driven tool in form of a small elongate cylindrical milling tool (9) for rounding out (c) the ridge between two bevelled faces at the same time as the bevelling takes place, the axis of the milling tool (9) being aligned radially with respect to the gear wheel (1) and the milling tool (9) being displaced forwards and backwards in the axial direction of the work-piece in synchronism with the teeth passing by, and the milling tool (9) being moved and withdrawn tangentially to the slope of the bevel.

2. Machine tool according to Claim 1, characterised in that the forward and rearward movement of the small elongate cylindrical milling tool (9) is effected by cam drive.

3. Machine tool according to one or more of the preceding claims, characterised in that the machining tools (4, 5, 9) are located at three different peripheral positions, and, at the start of the machining process, work together at, in each case, a raw tooth (1).

4. Machine tool according to one or more of the preceding claims, characterised in that the off-centre cutters (4, 5) operate on a stationary gear wheel (1), which can be rotated further in a stepwise manner, and the small elongate cylindrical milling tool (9) operates during the step rotation such that after 360° rotation of the gear wheel (1), the machining operation has been completed.

5. Machine tool according to one or more of the preceding claims, characterised by the gear wheel (1) being driven continuously in rotation.

6. Machine tool according to one or more of the preceding claims, characterised in that the forward and rearward movement has a component which is in the radial direction relative to the axis (2) of the work-piece, the radial component preferably corresponding in value to an inclination of the axis of the small elongate cylindrical milling tool to the plane in which the work-piece (gear wheel 1) revolves.

## Revendications

1. Machine-outil pour le façonnage en forme de toit des faces frontales des dents (3) de roues dentées (1) ou analogues, avec deux couteaux frappeurs (4, 5) entraînés en rotation, usinant chacun simultanément sur des dents différentes l'une des deux surfaces en forme de toit (a, b), couteaux qui, par leurs arêtes de coupe frontales, sortent des entre-dents après le processus de coupe, caractérisée par un troisième outil, entraîné en rotation, réalisé sous la forme d'une fraise à queue ou en bout (9), pour usiner l'arrondi de faîte (c) en même temps et parallèlement au façonnage en forme de toit, arrondi dont l'axe est orienté radialement par rapport à la roue dentée (1), fraise qui est avancée et rétractée dans la direction axiale de la pièce à usiner, au rythme du défilement des dents (3), en plongeant et en ressortant, tangentiellement à l'inclinaison de la forme en toit.

2. Machine-outil selon la revendication 1, caractérisée en ce que le mouvement d'avancée et de recul de la fraise à queue (9) s'effectue sous la commande d'une came.

3. Machine-outil selon l'une ou plusieurs des revendications précédentes, caractérisée en ce que les outils d'usinage (4, 5, 9) sont placés en trois positions périphériques différentes et travaillent, au début de l'usinage, globalement chacun une dent (1) brute.

4. Machine-outil selon l'une ou plusieurs des revendications précédentes, caractérisée en ce que les couteaux frappeurs (4, 5) usinent une roue dentée (1) stationnaire, susceptible de continuer à tourner par des déplacements par pas, et en ce que la fraise à queue (9) usine pendant la rotation pas à pas, de manière que l'usinage de la roue dentée (1) soit achevé après que celle-ci ait parcouru une rotation de 360°.

5. Machine-outil selon l'une ou plusieurs des revendications précédentes, caractérisée par une roue dentée (1) entraînée en rotation de façon continue.

6. Machine-outil selon l'une ou plusieurs des revendications précédentes, caractérisée en ce que le mouvement d'avancée et de recul comporte une composante radiale à l'axe (2) de la pièce à usiner, et dont la valeur correspond de préférence à une inclinaison de l'axe de fraise à queue par rapport au plan périphérique de la pièce à usiner (roue dentée 1).
